Europäisches Patentamt

European Patent Office

Office européen des brevets

(11) Publication number: **0 383 330**
**A2**

## EUROPEAN PATENT APPLICATION

(21) Application number: **90102970.2**

(22) Date of filing: **15.02.90**

(51) Int. Cl.⁵: **G11B 23/40, G11B 23/03**

(30) Priority: **16.02.89 JP 17312/89 U**

(43) Date of publication of application:
**22.08.90 Bulletin 90/34**

(84) Designated Contracting States:
**DE FR GB**

(71) Applicant: **TOKIN CORPORATION**
**7-1, Koriyama 6-chome Taihaku-ku**
**Sendai-shi Miyagi-ken(JP)**

(72) Inventor: **Kogo, Masanori, c/o Tokin**
**Corporation**
**7-1, Koriyama 6-chome, Taihaku-ku**
**Sendai-shi, Miyagi-ken(JP)**

(74) Representative: **Prüfer, Lutz H., Dipl.-Phys.**
**Harthauser Strasse 25d**
**D-8000 München 90(DE)**

(54) **A combination of a magnetic disk cartridge and a label affixed thereto.**

(57) A label (58) is affixed to an outer surface (46) of a housing (43) containing magnetic disk for magnetically recording information as stored information. The label has a back surface affixed to the outer surface of the housing and an opposite surface on which an ornamental device is previously printed to be utilized for identifying the stored information recorded in the magnetic disk in the housing to which the label is affixed. The ornamental device may comprise a portrait and/or a tasteful, an artistic, an advertising, a seasonal, or a memorial graphic design. A cartridge comprises the housing for containing the magnetic disk for magnetically recording information as stored information, and the label affixed to the outer surface of the housing.

FIG. 3

EP 0 383 330 A2

Xerox Copy Centre

## A COMBINATION OF A MAGNETIC DISK CARTRIDGE AND A LABEL AFFIXED THERETO

This invention relates to a magnetic disk cartridge and, in particular, to a label to be affixed to an outer surface of a housing of the magnetic disk cartridge.

A flexible magnetic disk is for magnetically recording information such as computer program and/or data to be processed as stored information and is well known in the art as a floppy disk. The flexible magnetic disk is contained in a housing to form a magnetic disk cartridge. When the magnetic disk cartridge is loaded in a recording and reproducing device having a magnetic head, the magnetic head accesses the flexible magnetic disk to record and/or reproduce information.

In general, a label is used together with the magnetic disk cartridge. The label has a back surface affixed onto a part of the outer surface of the housing. The label is conventionally made of blank paper on which a plurality of ruled lines are drawn and is used for writing file administration information such as a title of the file, an owner of the cartridge thereon by the user as an index of the cartridge.

Therefore, when the user uses the cartridge, the user is troubled with writing the file administration information on the label. Furthermore, it is difficult for the user to make the cartridge with a beautiful and individual visual appearance by writing the file administration information.

It is therefore an object of this invention to provide a label having a back surface affixed on a magnetic disk cartridge, which label is suitable for distinguishing the cartridge with a beautiful and individual visual appearance from another cartridge without writing a file administration information thereon.

A label to which this invention is applicable is affixed to an outer surface of a housing containing magnetic disk for magnetically recording information as stored information. According to this invention, the label has a back surface affixed to the outer surface of the housing and an opposite surface on which an ornamental device is previously printed to be utilized for identifying the stored information recorded in said magnetic disk in the housing to which the label is affixed.

A cartridge to which this invention is applicable comprises a housing for containing a magnetic disk for magnetically recording information as stored information, and a label affixed to an outer surface of the housing. According to this invention, the label has an ornamental device which is printed thereon and utilized for identifying the stored information.

According to an aspect of this invention, a combination of a magnetic disk cartridge and a label is obtained. The magnetic disk cartridge comprises a magnetic disk for magnetically recording information as stored information and a housing containing the magnetic disk. The label is used to be affixed onto an outer surface of said housing. The label having an ornamental device which is printed thereon and utilized for identifying the stored information.

Fig. 1 is a front view of a cartridge comprising a housing according to a first embodiment of this invention;

Fig. 2 is a rear view of the cartridge of Fig. 1;

Fig. 3 is a perspective view of another cartridge comprising a housing according to a second embodiment of this invention;

Fig. 4 is a sectional view taken along a line 4-4 in Fig. 3; and

Figs. 5-7 are views illustrating different modifications of Fig. 3.

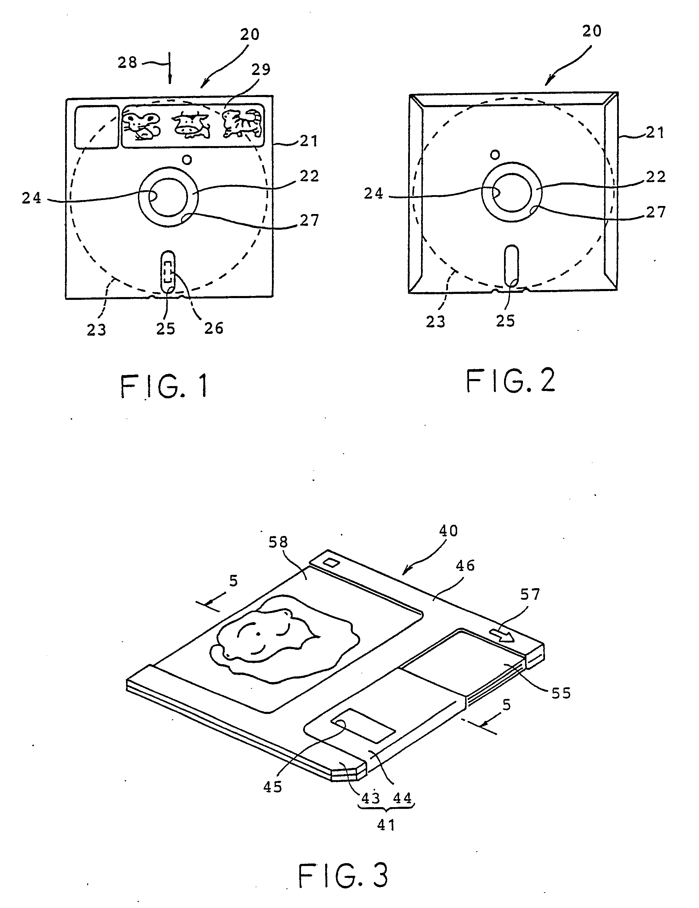

Referring to Figs. 1 and 2, a cartridge 20 comprises a housing 21 according to a first embodiment of this invention and a flexible magnetic disk 22 covered by the housing 21. This housing 21 is made of thin and soft plastic material and therefore called a soft housing in the art.

The flexible magnetic disk 22 has a circular recording magnetic medium 23 and a center hole 24. The flexible magnetic disk 22 has a diameter of, for example, 5.25 inches or 8 inches.

The housing 21 forms a soft housing having confronting front and rear cover plates. The housing 21 has a pair of openings 25 formed in the front and rear cover plates, respectively, for permitting a magnetic recording and reproducing head 26 illustrated by a phantom line in Fig. 1 to access the flexible magnetic disk 22. The housing 21 also has a pair of central holes 27 formed in the front and rear cover plates, respectively. Each of the central holes 27 has a diameter larger than that of the center hole 24 of the flexible magnetic disk 22. The housing 21 has an outer casing surface restricted by the opening pair 25 and the central hole pair 27.

A label 29 has a back surface affixed on a predetermined area of the outer casing surface. A desired ornamental device is previously printed on the label 29 as a tasteful graphic design to be utilized for identifying the stored information. The desired ornamental device is for identifying a cartridge 20 without handwriting a file administration information by a user thereon. The label 29 having the desired ornamental device can be selected by the user from a plurality of labels having different ornamental device designs comprising combination of patterns and/or colors, such as portraits, or tasteful, artistic, seasonal, memorial and/or advertising masks, pictures, and/or drawings.

Referring to Fig. 3, another cartridge 40 comprises a housing 41 according to a second embodiment of this invention and a flexible magnetic disk 42 covered by the housing. The flexible magnetic disk 42 has a diameter of, for example, 3.5 inches.

The housing 41 comprises a covering casing 43 made of a thick and hard plastic material for covering the magnetic flexible disk 42 and a shutter 44 of a metal having a pair of shutter openings 45. The covering casing 43 is made of a thick and hard plastic material.

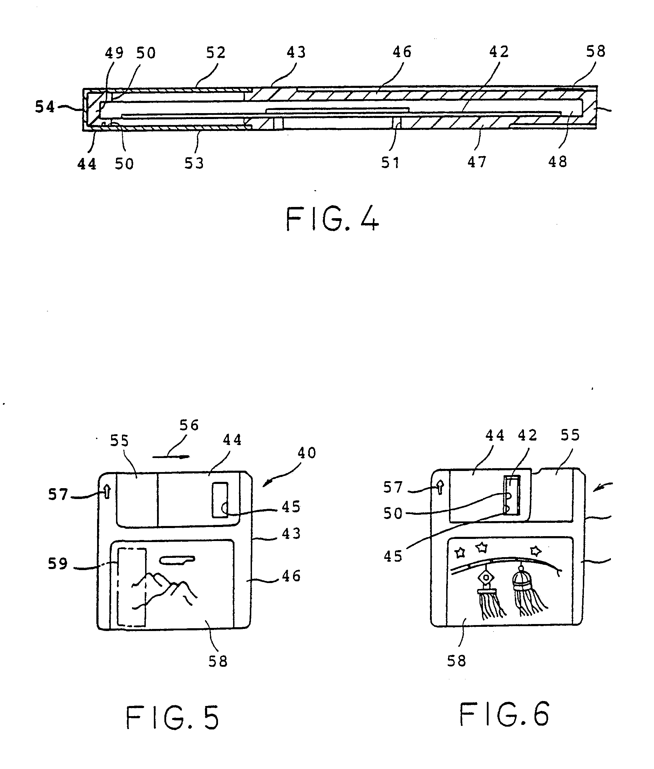

The covering casing 43 comprises a pair of generally flat front and rear plates 46 and 47 which confront with a space 48 left therebetween, as shown in Fig. 4. Each of the flat plates 46 and 47 has a rectangular periphery. A bridging wall 49 bridges the peripheries of the flat plates 46 and 47 to define the space 48 as a locating space for locating the flexible magnetic disk 42.

The covering casing 43 has a pair of casing openings 50 in the confronting flat plates 46 and 47, respectively, for permitting the magnetic recording and reproducing head 26 (Fig. 1) to access the flexible magnetic disk 42 therethrough. The covering casing 43 further has a central hole 51 formed in the rear plate 47 and has an outer casing surface restricted by the casing opening pair 50 and the central hole 51.

The shutter 44 comprises a pair of flat elements 52 and 53 overlying on the pair of flat plates 46 and 47, respectively. Both of the flat plates 46 and 47 are connected by a side element 54 overlying on the bridging wall 49 as shown in Fig. 5. The shutter openings 45 are formed in the flat plates 46 and 47, respectively.

The shutter 44 is mechanically coupled to the covering casing 43 to shut casing opening pair 50 as depicted in Figs. 3 and 4. The shutter 44 is slidable on a preselected area 55 of the outer casing surface to selectively open the casing opening pair 50 through the shutter opening pair 45 as depicted in Fig. 6. The shutter 44 is energized by a spring (not shown) in a direction designated by an arrow 56 illustrated in Fig. 5, and therefore, shuts the casing opening pair 50 normally.

When the cartridge 40 is inserted into a magnetic disk recording and reproducing device of the type described in a direction designated by an arrow 57 indicated on the containing casing 43, the shutter 44 is forcedly slid to open the casing opening pair 50. As a result, the shutter opening pair 45 and the casing opening pair 50 are located under the head 26 (Fig. 1).

The outer casing surface consists of the preselected area 55 and a specific area of the outer casing surface except the preselected area 55.

A label 58 has a back surface affixed on a predetermined area of the specific area of the outer casing surface. In this embodiment, the label 58 comprises an ornamental device representative of a certain portrait to be utilized for identifying the stored information. The predetermined area is selected on a surface of the front flat plate 46. The desired ornamental device is previously drawn or printed on the label 58 by a maker side. The desired ornamental device is for distinguishing the cartridge 40 without handwriting a file administration information thereon as described above in connection with the label 29 illustrated in Fig. 1.

Instead of the label deposited on the outer casing surface, a film may be affixed on the outer casing surface of the casing 43, or a design is directly printed on the outer casing surface of the casing 43.

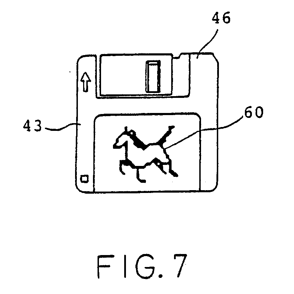

The label 58 illustrated in Fig. 5 is representative of an artistic design as an ornamental device. A memorial graphic design is shown in Fig. 6. A colored pattern 60 is directly printed on the outer casing surface of the casing 43, in Fig. 7.

The label 58 and the printed pattern 60 may be mounted at a position different from the mounting position of the label 58 in Figs. 3-7.

While this invention has thus far been described in conjunction with several embodiments thereof, it will readily be possible for those skilled in the art to put this invention into practice in various other manners.

## Claims

1. A label for being affixed to an outer surface of a housing containing magnetic disk for magnetically recording information as stored information, wherein said label has a back surface affixed to the outer surface of said housing and an opposite surface on which an ornamental device is previously printed to be utilized for identifying said stored information recorded in said magnetic disk in said housing to which said label is affixed.

2. A label as claimed in Claim 1, wherein said ornamental device comprises a portrait and/or a tasteful, an artistic, an advertising, a seasonal, or a memorial graphic design.

3. A cartridge comprising a housing for containing a magnetic disk for magnetically recording information as stored information, and a label affixed to an outer surface of said housing, wherein said label has an ornamental device which is printed thereon and utilized for identifying said stored information.

4. A cartridge as claimed in Claim 3, wherein said ornamental device comprises a portrait and/or a tasteful, an artistic, an advertising, a seasonal, or a memorial graphic design.

5. A cartridge comprising a housing for containing a magnetic disk for magnetically recording information as stored information, wherein said housing has an outer surface and an ornamental device directly drawn on the outer surface to be utilized for identifying said stored information.

6. A cartridge as claimed in Claim 5, wherein said ornamental device comprises a portrait and/or a tasteful, an artistic, an advertising, a seasonal, or a memorial graphic design.

7. A combination of a magnetic disk cartridge, said cartridge comprising a magnetic disk for magnetically recording information as stored information and a housing containing said magnetic disk and a label to be affixed onto an outer surface of said housing, said label having an ornamental device which is printed thereon and utilize for identifying said stored information.

8. A combination as claimed in Claim 7, wherein said ornamental device comprises a portrait and/or a tasteful, an artistic, an advertising, a seasonal, or a memorial graphic design.

FIG. 1

FIG. 2

FIG. 3

FIG. 4

FIG. 5

FIG. 6

FIG. 7